# EUROPÄISCHE PATENTANMELDUNG

(11) **EP 1 313 351 A1**
(43) Veröffentlichungstag der Anmeldung: **21.05.2003**
(21) Anmeldenummer: 01127246.5
(22) Anmeldetag: 16.11.2001
(51) Int. Cl.: H05B 3/06, H02G 15/115

(54) **Verbindungsmuffe für Heizleiter**

(71) Anmelder: Thermon Europe B.V., 2641 KG Pijnacker (NL)
(72) Erfinder: Pommé, Klaus Dietrich Rudolf, 2641 KG Pijnacker (NL); Pommé, Rudolf Hendrik David, 2641 KG Pijnacker (NL)
(74) Vertreter: Rupp, Christian, Dipl.Phys.

(57) **Zusammenfassung**

Die vorliegende Erfindung bezieht sich auf eine Verbindungsmuffe oder Kupplung um Leiter (1;2), insbesondere Heizleiter bzw. Serienheizleiter miteinander zu verbinden, und zwar so, dass der jeweilige elektrischen Verbinder (10) durch die Muffe gegenüber einer axialen Kraftwirkung entlastet wird. Darüber hinaus schottet die Muffe die elektrische Kontaktstelle beider Leiterenden gegenüber Feuchtigkeit und Staub ab.

Dabei weist die Verbindungsmuffe zwei axial ineinander verschraubbare Grundhohlkörper (3;4) auf, durch die jeweils einer der beiden Leiter (1;2) geführt wird und in denen im miteinander verschraubten Zustand ein elektrischer Verbinder (10) für die beiden Leiter (1;2) und wenigstens ein Klemmelement (5) aufgenommen sind, wobei das Klemmelement (5) bei einem Verschrauben der beiden Grundhohlkörper (3;4) wenigstens einen Leiter (1 bzw. 2) im Sinne einer Zugentlastung gegenüber einer axialen Verschiebung festklemmt.

## Beschreibung

Die vorliegende Erfindung bezieht sich auf eine Verbindungsmuffe oder Kupplung, um Leiter, insbesondere Heizleiter bzw. Serienheizleiter derart miteinander zu verbinden, dass der jeweilige elektrische Verbinder durch die Muffe gegenüber einer axialen Kraftwirkung zugentlastet wird. Darüber hinaus schottet die Muffe die elektrische Kontaktstelle beider Leiterenden gegenüber Feuchtigkeit und Staub ab.

Im Anlagenbau bzw. in der Verfahrenstechnik ist es unter Umständen notwendig, Armaturen sowie Rohrleitungen mit elektrischen Heizleitern zu beheizen, um auch bei niedrigen Außentemperaturen deren Funktionsweise zu garantieren bzw. die Viskosität der durchfließenden Flüssigkeiten zu erhöhen. Derartige Heizleiter haben in der Mitte einen sogenannten Heißteil, der an beiden Seiten an sogenannte Kaltkabel angeschlossen werden kann, da der Heißteil aufgrund seiner hohen Betriebstemperatur nicht unmittelbar an einen elektrischen Anschlusskasten angeschlossen werden kann.

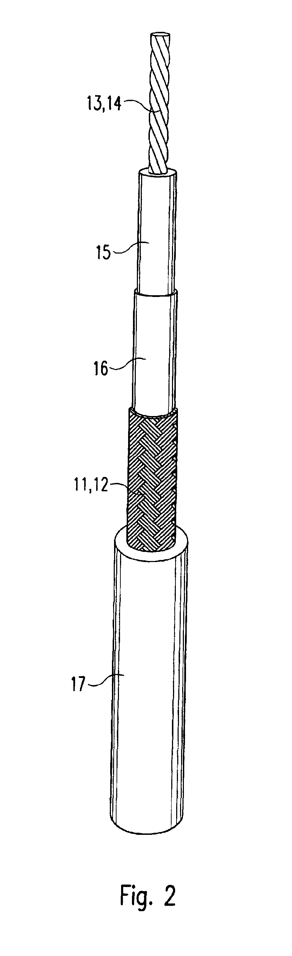

Ein derartiges Heizkabel ist in Fig. 2 dargestellt. Der temperaturbestimmende eigentliche Heißteil des Heizkabels ist eine Litze 13,14, die durch ihren elektrischen Widerstand bei Beaufschlagung mit einem entsprechenden Strom erwärmt wird. Die Litze 13,14 ist von einer ersten Isolierschicht 15 aus Kunststoff, beispielsweise PTFE, umgeben. Die erste Isolierschicht 15 ist aus technischen Gründen (mechanische Belastbarkeit) mit einem glasfaserverstärkten Glaskeramikband 16 umschlossen, über das ein Erdschutzgeflecht 11,12 gewickelt ist, das bei einer mechanischen Beschädigung den Heizleiter vor einem Kurz- oder Erdschluss schützt. Der gesamte Heizleiter ist nochmals von einer äußersten Schutzhülle (Leitermamtel) 17 aus Kunststoff, beispielsweise PTFE, umgeben, die bis 260°C einen stabilen mechanischen und elektrisch-isolierenden Schutz darstellt.

### Stand der Technik:

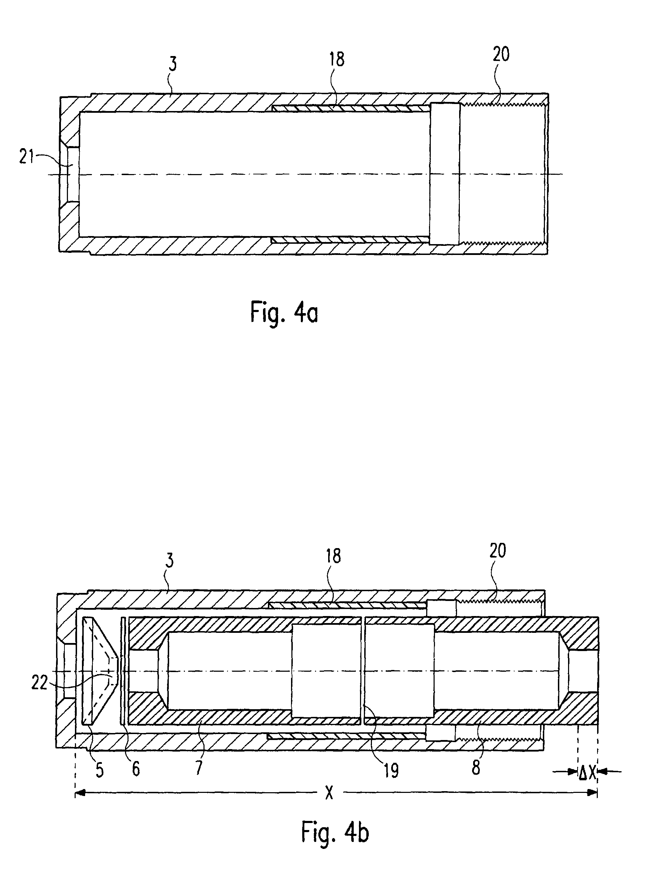

Sowohl Heißteil als auch Kaltteil von Serienheizleitern besitzen einen derartigen Aufbau. Um nun derartige Heizleiter miteinander oder ein Heißteil mit einem Kaltteil zu verbinden, wird sowohl die Litze als auch das Erdschutzgeflecht gemäß Figur 3 von der Isolation getrennt. Die Litzen der beiden zu verbindenden Leiter werden gemäß dem Stand der Technik mit einem Crimpelement mittels einer Crimpzange verbunden. Gleiches gilt für das abisolierte Erdschutzgeflecht, das bei beiden zu verbindenden Leitern gezwirnt und ebenfalls mit einem Crimpelement mittels Crimpzange verbunden wird. Gemäß dem Stand der Technik wird die Verbindungsstelle dann mit Isolier-Bändern umwickelt, bzw. im aufwendigeren Fall mit einer Überwurfverschraubung versehen, die im Inneren an der Verbindungsstelle mit Silikonmasse ausgegossen wird. Zweck dieser Maßnahmen ist es die elektrische Verbindungsstelle mechanisch zu entlasten, falls längs der Heizleiter Zugkräfte auftreten. Der Silikon-Verguss dient aber auch dazu, die elektrische Verbindung feuchtigkeits- bzw. wasserdicht gegen außen abzudichten um insbesondere auch einen Kurzschluss zwischen Heizlitze und Erdungsgeflecht zu vermeiden.

Diese bekannte Technik hat indessen verschiedene Nachteile: Diese Art der Verbindung zweier Heizleiter kann nicht ohne weiteres wieder gelöst werden. Es müssten beide Kabel links und rechts von der Verbindungsstelle gekappt und neu abisoliert werden. Außerdem ist bei einer derartigen Verbindung nach dem Stand der Technik keine Zugentlastung für starke axiale Kräfte längs der Kupplung gegeben. Bei einer mechanischen Beanspruchung beider Kabel in axialer Richtung kann die Crimpverbindung der Litze bzw. des Erdschutzgeflechtes reissen. Außerdem ist ein Vergießen mit Silikon beispielsweise auf der Baustelle äußerst umständlich. Ebenso stellt die Tatsache, dass für verschiedene Kabeldurchmesser auch entsprechend unterschiedliche Crimp-Schuhe verwendet werden müssen, ggf. ein logistisches Problem dar.

### Aufgabe der Erfindung:

Aufgabe der vorliegenden Erfindung ist es daher, eine verbesserte Verbindungsmuffe für Leiter, insbesondere Heizleiter bereitzustellen.

Die oben genannte Aufgabe wird durch eine Verbindungsmuffe gemäß der Merkmalen des Anspruchs 1 gelöst. Die abhängigen Ansprüche bilden den zentralen Gedanken der Erfindung in besonders vorteilhafter Weise weiter.

Bei der vorliegenden Erfindung weist die Verbindungsmuffe zwei axial ineinander verschraubbare Grundhohlkörper auf, durch die jeweils einer der beiden Leiter geführt wird und in denen im miteinander verschraubten Zustand ein elektrischer Verbinder für die beiden Leiter und wenigstens ein Klemmelement aufgenommen sind. Dabei klemmt das Klemmelement bei einem Verschrauben der Grundhohlkörper wenigstens einen Leiter im Sinne einer Zugentlastung gegenüber einer axialen Verschiebung fest.

Gemäß der Erfindung ist das Klemmelement eine konische Tellerfeder, die bei einem Verschrauben der beiden Grundhohlkörper den Mantel des Leiters im Wesentlichen ringförmig einschnürt, ohne diese jedoch einzuschneiden.

Um eine axiale Formung der Tellerfeder zu verhindern, ist zwischen dem zugespitzten Ende der konischen Tellerfeder und einem Anschlag eine Beilagscheibe eingelegt.

Vorteilhafterweise weist der oben erwähnte elektrische Verbinder eine Lüsterklemme auf.

Gemäß der Erfindung ist der elektrische Verbinder von einer Hülse aus elektrisch-isolierendem Material umgeben.

Das oben erwähnte Klemmelement ist zwischen Grundhohlkörper und Hülse eingesetzt. Dabei ist die Hülse vorteilhafterweise quergeteilt.

Einer der beiden Grundhohlkörper weist einen hohlzylindrischen Einsatz in einem Bereich auf, der die Stoßstelle der zweigeteilten Hülse umgibt. Dieser hohlzylindrische Einsatz ist erfindungsgemäß aus elektrisch-isolierendem Material. Der Vorteil des ganzen ist, dass die Hülse zusammen mit dem hohlzylindrischen Einsatz eine Labyrinthartige elektrische Isolierung zwischen dem elektrischen Verbinder und den Grundhohlkörpern darstellen.

Die erfindungsgemäße Verbindungsmuffe hat auch den Vorteil, dass das Klemmelement den Leiter gegenüber Feuchtigkeit abdichtend verschließt.

Die Verbindungsmuffe ist in der Regel so gestaltet, dass jeder der beiden Leiter durch ein Klemmelement zugentlastet wird. Die angesprochenen Leiter können Kalt- und/oder Heizkabel von Heizleitern sein.

Weitere Merkmale, Eigenschaften und Vorteile der vorliegenden Erfindung werden nunmehr anhand von Ausführungsbeispielen und unter Bezugnahme auf die begleitenden Figuren der Zeichnungen erläutert.
Fig. 1 zeigt die axiale Anordnung der Einzelteile der Verbindungsmuffe gemäß der vorliegenden Erfindung in nicht-verschraubtem Zustand,
Fig. 2 zeigt den Aufbau eines konventionellen Heizkabels,
Fig. 3 zeigt eine Aufbereitung des Heizkabels gemäß Figur 2,
Fig. 4a zeigt den Grundhohlkörper mit dem hohlzylindrischen Einsatz, und
Fig. 4b zeigt den Grundhohlkörper mit dem hohlzylindrischen Einsatz, der konischen Tellerfeder, der Beilagscheibe sowie beiden Hülsen-Elementen im nicht verschraubten Zustand.

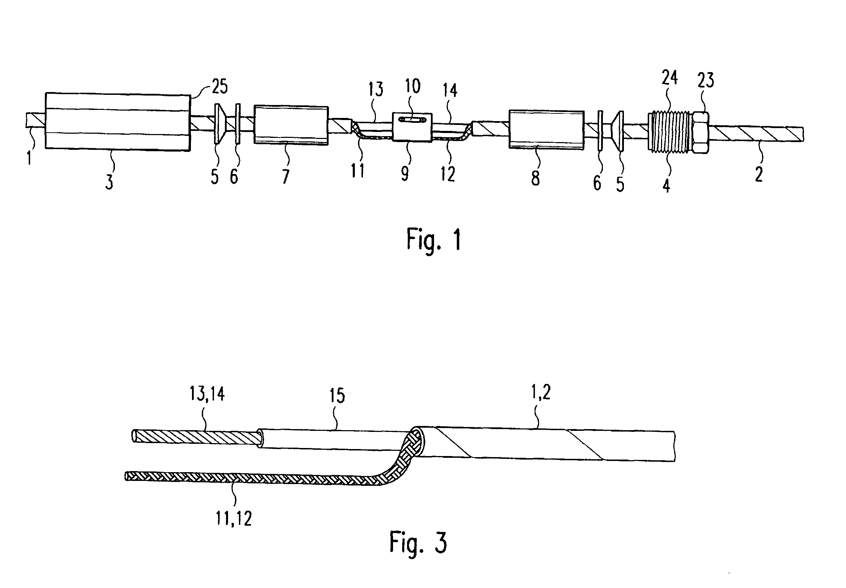

Fig. 1 zeigt die erfindungsgemäße Verbindungsmuffe mit ihren Einzelteilen in demontiertem Zustand. Die beiden Leiter 1, 2 sind jeweils durch zwei ineinander verschraubbare Grundhohlkörper 3,4 geführt. Der Grundhohlkörper 3 ist ein Sechskant 25 mit Innengewinde (20 in Fig.4). Der Grundhohlkörper 4 besitzt ein dem Innengewinde 20 des Grundhohlkörpers 3 entsprechendes Außengewinde 24 mit einem Sechskantkopf 23. Beide Grundhohlkörper 3,4 sind aus Metall, beispielsweise aus V4A-Stahl. Ebenso geführt werden die Leiter 1,2 durch eine zweigeteilte Hülse 7,8. Zwischen jedem Hülsenelement 7 bzw. 8 und dem entsprechenden Grundhohlkörper 3 bzw. 4 ist der Leiter 1 bzw. 2 durch eine konische Tellerfeder 5 sowie an deren zugespitztem Ende eine Beilagscheibe 6 geführt. Diese Beilagscheibe 6 verhindet bei einem Anpressen eine ungewollte Deformation der Tellerfeder 5.

Die Litzen 13 und 14 der beiden Leiter 1 und 2 sowie deren Erdschutzgeflecht 11 bzw. 12 sind gemäß Figur 3 abisoliert bzw. aufgezwirnt und in einer Lüsterklemme 10 jeweils miteinander verbunden. Die Lüsterklemme 10 ist in einem elektrisch-isolierenden, zylindrischen Körper 9 integriert. Beim Verschrauben der beiden Grundhohlkörper 3,4 werden die Hülsen 7 und 8 über die abisolierten Abschnitte der Leiter bzw. das elektrische Verbindungselement 9 und 10 geschoben. Die Teile 5, 6, 7 und 8 sind in ihrem Außendurchmesser so bemessen, dass sie in die verschraubbare Grundkörper 3 und 4 aufgenommen werden können. Beim Verschrauben der beiden Grundhohlkörper 3 und 4 werden beide Tellerfedern 5 mit ihrem zugespitztem Ende an die Beilagscheibe 6 bzw. an die Hülsen 7 und 8 gedrückt, so dass sie den KunststoffMantel 17 (beispielsweise aus PTFE) des Leiters 1, 2 im Wesentlichen ringförmig einschnüren, jedoch nicht einschneiden.

Der Grundhohlkörper 3 enthält einen hohlzylindrischen Einsatz 18 in dem Bereich, der die Stoßstelle der zweigeteilten Hülse 7 und 8 umgibt. Da der hohlzylindrische Einsatz 18 im Grundhohlkörper 3, die Hülsen 7 und 8 sowie der zylindrische Körper 9 aus elektrisch-isolierendem Material bestehen, bilden diese im montierten Zustand eine labyrinthartige elektrische Isolierung zwischen dem elektrischen Verbinder 10 und den Grundhohlkörpern 3 und 4.

Durch diese Art der Verbindung werden beide Leiter 1, 2 in axialer Richtung zugentlastet. Das zugentlastende Element ist dabei die Tellerfeder 5, deren Innendurchmesser jeweils an den entsprechenden Querschnitt des Leiters 1, 2 angepasst ist.. So ist es beispielsweise möglich, dass zwei Leiter 1, 2 mit unterschiedlichen Außenradien miteinander zugfest und - aufgrund der Verspreizung der Tellerfeder 5 zwischen Grundhohlkörper 3 bzw. 4 und dem Leitermantel 17 sowie durch das Anpressen der Hülsen 7 und 8 gegeneinander - wasserdicht verbunden werden können. Ein weiterer Vorteil dieser Verbindungsmuffe ist die Wiederverwendbarkeit.

Da die Tellerfeder 5 bei dem Verschrauben der Grundhohlkörper 3,4 den Leitermantel nicht einschneidet und die Litzen 13, 14 sowie das Erdschutzgeflecht mittels der Lüsterklemme 16 verschraubt werden, kann die Verbindungsmuffe im Prinzip jederzeit demontiert und wiederverwendet werden..

Die Tellerfeder 5 ist hat in der Aufsicht die Form einer durchbohrten Scheibe, wobei die Seitenansicht konisch bzw. kegelstumpfförmig verläuft. Die Tellerfeder 5 weist eine Materialstärke in der Größenordnung von ein bis drei Millimetern auf. Die Innenbohrung hat einen Durchmesser, der im wesentlichen dem verwendeten Leiterdurchmesser entspricht. Die Innenbohrung ist konzentrisch in axialer Richtung der Tellerfeder 5 vorgesehen. Am Außenrand ist die Tellerfeder 5 zylindrisch bzw. in axialer Richtung geschliffen.

Die Materialien, die die Verbindungsmuffe aufweist, sind aus Metall, beispielsweise aus V4A-Stahl (Grundhohlkörper 2, 4, Beilagscheibe 6), sowie aus Kunststoff, beispielsweise aus PTFE mit 15% Glasfaseranteil (Tellerfeder 5, Hülsen 7,8, zylindrischer Isolierkörper 9, Leitermantel 1, 2). Aus diesem Grund kann das System Temperaturen bis 260° ausgesetzt werden.

In Figur 4a ist der Grundhohlkörper 3 mit dem eingepassten hohlzylindrischen Einsatz 18 dargestellt. An einer Stirnseite weist der Grundhohlkörper 3 eine Bohrung 21 auf durch die das (Heiz-)Kabel geführt wird. Die gegenüberliegende Seite ist offen und weist bis zu dem eingepassten hohlzylindrischen Einsatz 18 ein Innengewinde 20 auf, in welches der andere Grundhohlkörper 4 aus Figur 1 eingeschraubt wird.

Fig. 4b zeigt den Grundhohlkörper mit dem hohlzylindrischen Einsatz , der konischen Tellerfeder 5, der Beilagscheibe 6 und beiden Hülsen-Elementen 7 und 8. Der hohlzylindrische Einsatz 18 ist in den Grundhohlkörper so eingepasst, daß er die Stoßstelle 19 der beiden Hülsen 7 und 8 ringförmig umschließt. Bei einem Einschrauben des Grundkörpers 4 aus Figur 1 in den Grundhohlkörper 3 werden die beide Hülsen 7 und 8 an der Stoßstelle 19 aneinandergepreßt und radial nach außen gegen den hohlzylindrischen Einsatz 18 gedrückt. Ebenso wird die Tellerfeder 5 an die Innenseite des Grundhohlkörpers 3 gedrückt und gleichzeitig auch radial verformt. Dadurch entsteht ein kompakter Verschluß einerseits an der Bohrung 22 der Tellerfeder 5 gegenüber dem durchgeführten Kabel als auch an der Stoßstelle 19 gegenüber dem Grundhohlkörper 3. Insgesamt werden sämtliche Innenteile 5, 6, 7 und 8 in beim Ineinanderschrauben der beiden Grundhohlkörper 3, 4 in axialer Richtung um eine Strecke Δx zusammengedrückt.

Darüberhinaus ist durch den hohlzylindrischen Einsatz 18 im Grundhohlkörper 3 mit den beiden Hülsen 7 und 8 ein äußerst langer Stromkriechpfad gegeben. Ein eventuell vorhandener Kriechstrom müsste von der Lüsterklemme 10 über den zylindrischen Körper 9 bis zur Stoßstelle 19 der beiden Hülsen 7 und 8 gelangen und von dort die Hälfte der Länge des hohlzylindrischen Einsatzes 18 zurücklegen. Die Länge dieses Kriechpfades macht eine Erdung der Grundhohlkörper 3 ggf. entbehrlich.

Die Verbindungsmuffe ist auch für Ex-Zonen (Explosionsgefährdete Bereiche) tauglich. Die Einzeltteile der erfindungsmäßigen Verbindungsmuffe sind einfach zu fertigen, so dass das System eine kostengünstige, einfache, optimale Alternative zu dem bestehenden Verfahren (Crimpen, Silikonverguss) darstellt.

Die Montage des erfindungsgemäßen Elements erfolgt durch folgende Schritte:
A) Abisolieren und verzwirnen der Litzen 13;14 sowie der Erdungsgeflechte 11;12 der beiden zu verbindenden Leiter.
B) Durchführen der Leiter 1;2 jeweils durch die Grundhohlkörper 3;4 in der Weise, dass sich die Gewinde der Grundhohlkörper 3;4 auf der abisolierten Seite der Leiter 1;2 befinden.
C) Durchführen der Leiter 1;2 jeweils durch die Tellerfeder 5 und die Beilagscheibe 6 und zwar so, dass die Beilagscheibe 6 auf der Seite des zugespitzten Endes der Tellerfeder 5 positioniert ist, wobei es gleichgültig ist in welche Richtung das zugespitzte Ende der Tellerfeder 5 zeigt.
D) Durchführen der Leiter 1;2 jeweils durch eine der beiden Hülsen 7 bzw. 8 in der Weise, dass die Seiten mit dem größeren Innenradius der Hülsen 7;8 zu dem abisolierten Enden zeigen.
E) Gegenseitiges Kontaktieren der Litzen 13;14 sowie der verzwirnten Erdungsgeflechte 11;12 durch Verschrauben in der jeweiligen Lüsterklemme 10.
F) Durch Zusammenführen der beiden Grundhohlkörper 3;4 werden beide Hülsen 7 und 8 über den zylindrischen Körper 9 geschoben sowie auf beiden Seiten die Tellerfeder an die Beilagscheibe gedrückt.
G) Durch Verschrauben der beiden Grundhohlkörper 3;4 miteinander wird nun in einem Vorgang die axiale Bewegung, die den Tellerfedern 5 aufgezwungen wird, in eine radiale Verformung derart umgesetzt, dass die Tellerfedern 5 mit ihrem zugespitztem konischen Ende den Leitermantel einschnüren und diesen ringförmig umschließen, jedoch nicht einschneiden. Gleichzeitig werden die Hülsen 7 und 8 über dem elektrischen Verbinder 9;10 aneinander und innerhalb der Grundhohlkörper 3;4 radial nach außen gepresst.

Die Vorteile der Erfindung können wie folgt zusammengefasst werden:
1. Die Verbindungsmuffe ist so ausgelegt, dass sie den einschlägigen Normen entspricht,
2. Die Tellerfedern aus Glasfaserverstärktem Teflon sorgen
   - sowohl für den erforderlichen Schutz gegen das Eindringen von Feuchtigkeit,
   - als auch für eine erforderliche Zugentlastung (20 Newton) in axialer Richtung,
3. Die verwendeten Standard-Anschlussklemmen sind für beliebige Litzengrößen geeignet und daher für verscheidenartige Leiter (Heizleiter) auch unterschiedlicher Herkunft kompatibel.
4. Durch die Integration der Standard-Anschlussklemmen in einem Ex-geschützten Gehäuse ist die Verbindungsmuffe für einen Einsatz in Ex-Zonen geeignet.
   A) 5. Die doppelte Isolierung im Inneren der Muffe macht eine Erdung der Muffe nicht notwendig.

### Bezugszeichenliste

- 1: erster Heiz-Leiter
- 2: zweiter Heiz-Leiter
- 3: erster Grundhohlkörper in Form eines Sechskants mit Innengewinde und integriertem hohlzylindrischem Einsatz
- 4: zweiter Grundhohlkörper mit Außengewinde und Sechskantkopf
- 5: konische Tellerfeder
- 6: Beilagscheibe
- 7: erster Teil der quergeteilten Hülse
- 8: zweiter Teil der quergeteilten Hülse
- 9: elektrisch isolierender zylindrischer Körper
- 10: Lüsterklemme
- 11: gezwirntes Erdschutzgeflecht des ersten Leiters
- 12: gezwirntes Erdschutzgeflecht des zweiten Leiters
- 13: Litze des ersten Leiters
- 14: Litze des zweiten Leiters
- 15: erste Isolierschicht aus Kunststoff
- 16: zweite Isolierschicht aus glasfaserverstärktem Keramikband
- 17: Äußerste Schutzhülle aus Kunststoff
- 18: hohlzylindrischer Einsatz aus Kunststoff
- 19: Stoßstelle der beiden Hülsen
- 20: Innengewinde
- 21: Bohrung im Grundhohlkörper
- 22: Bohrung in der Tellerfeder
- 23: Sechskantkopf
- 24: Aussengewinde
- 25: Sechskant

## Patentansprüche

1. Verbindungsmuffe für Leiter (1;2), aufweisend:
zwei axial ineinander verschraubbare Grundhohlkörper (3;4), durch die jeweils einer der beiden Leiter (1;2) geführt wird und in denen im miteinander verschraubten Zustand ein elektrischer Verbinder (10) für die beiden Leiter (1;2) und wenigstens ein Klemmelement (5) aufgenommen sind,
wobei das Klemmelement (5) bei einem Verschrauben der beiden Grundhohlkörper (3;4) wenigstens einen Leiter (1;2) im Sinne einer Zugentlastung gegenüber einer axialen Verschiebung festklemmt.

2. Verbindungsmuffe nach Anspruch 1,
**dadurch gekennzeichnet,**
**dass** das Klemmelement eine konische Tellerfeder (5) ist, die bei einem Verschrauben der beiden Grundhohlkörper (3;4) den Mantel des Leiters (1;2) im wesentlichen ringförmig einschnürt.

3. Verbindungsmuffe nach Anspruch 2,
**dadurch gekennzeichnet,**
**dass** das Klemmelement (5) die Hülle (17) des Leiters (1;2) einschnürt ohne diese einzuschneiden.

4. Verbindungsmuffe nach Anspruch 1 bis 3,
**dadurch gekennzeichnet,**
**dass** die Tellerfeder (5) aus elektrisch isolierendem Material besteht.

5. Verbindungsmuffe nach Anspruch 2 bis 4,
**dadurch gekennzeichnet,**
**dass** zwischen dem zugespitzten Ende der konischen Tellerfeder (5) und einem Anschlag eine Beilagscheibe (6) eingelegt ist, die eine axiale Verformung der Tellerfeder (5) verhindert.

6. Verbindungsmuffe nach Anspruch 1 bis 5,
**dadurch gekennzeichnet,**
**dass** der elektrische Verbinder (10) eine Lüsterklemme aufweist.

7. Verbindungsmuffe nach Anspruch 1 bis 6,
**dadurch gekennzeichnet,**
**dass** der elektrische Verbinder (10) von einer Hülse (7;8) aus elektrisch isolierendem Material umgeben ist.

8. Verbindungsmuffe nach Anspruch 7,
**dadurch gekennzeichnet,**
**dass** das Klemmelement (5) zwischen Grundhohlkörper (3;4) und Hülse (7;8) eingesetzt ist.

9. Verbindungsmuffe nach Anspruch 8,
**dadurch gekennzeichnet,**
**dass** die Hülse (7;8) quergeteilt ist.

10. Verbindungsmuffe nach Anspruch 9,
**dadurch gekennzeichnet,**
**dass** einer der beiden ineinander verschraubbaren Grundhohlkörper (3;4) einen hohlzylindrischen Einsatz (18) in einem Bereich aufweist, der die Stoßstelle der zweigeteilten Hülse (7;8) umgibt.

11. Verbindungsmuffe nach Anspruch 10,
**dadurch gekennzeichnet,**
**dass** der hohlzylindrische Einsatz (18) aus elektrisch isolierendem Material besteht.

12. Verbindungsmuffe nach Anspruch 1 bis 11,
**dadurch gekennzeichnet,**
**dass** die Hülse (7;8) zusammen mit dem hohlzylindrischer Einsatz (18) eine Labyrinthartige elektrische Isolierung zwischen dem elektrischen Verbinder (10) und dem Grundhohlkörper (3;4) darstellen.

13. Verbindungsmuffe nach Anspruch 1 bis 12,
**dadurch gekennzeichnet,**
**dass** das Klemmelement (5) den Leiter gegenüber Feuchtigkeit abdichtend verschließt.

14. Verbindungsmuffe nach Anspruch 1 bis 13,
**dadurch gekennzeichnet,**
**dass** jeder der beiden Leiter (1;2) durch ein Klemmelement (5) zugentlastet wird.

15. Verbindungsmuffe nach Anspruch 1 bis 14,
**dadurch gekennzeichnet,**
**dass** die Leiter (1;2) Kalt- und/oder Heizkabel von Heizleitern sind.

## Geänderte Patentansprüche

### Geänderte Patentansprüche gemäss Regel 86(2) EPÜ.

**1.** Verbindungsmuffe für Leiter (1;2), aufweisend:
zwei axial ineinander verschraubbare Grundhohlkörper (3;4), durch die jeweils einer der beiden Leiter (1;2) geführt wird und in denen im miteinander verschraubten Zustand ein elektrischer Verbinder (10) für die beiden Leiter (1;2) und wenigstens ein Klemmelement (5) aufgenommen sind,
wobei das Klemmelement (5) bei einem Verschrauben der beiden Grundhohlkörper (3;4) wenigstens einen Leiter (1;2) im Sinne einer Zugentlastung gegenüber einer axialen Verschiebung festklemmt,
**dadurch gekennzeichnet,**
**dass** das Klemmelement aus Kunststoff besteht und bei einem Verschrauben der beiden Grundhohlkörper (3;4) den Mantel des Leiters (1;2) im wesentlichen ringförmig einschnürt ohne ihn einzuschneiden.

**2.** Verbindungsmuffe nach Anspruch 1,
**dadurch gekennzeichnet,**
**dass** das Klemmelement (5) eine konische Tellerfeder (5) ist.

**3.** Verbindungsmuffe nach Anspruch 2,
**dadurch gekennzeichnet,**
**dass** zwischen dem zugespitzten Ende der konischen Tellerfeder (5) und einem Anschlag eine Beilagscheibe (6) eingelegt ist, die eine axiale Verformung der Tellerfeder (5) verhindert.

**4.** Verbindungsmuffe nach einem der Ansprüche 1 bis 3,
**dadurch gekennzeichnet,**
**dass** der elektrische Verbinder (10) eine Lüsterklemme aufweist.

**5.** Verbindungsmuffe nach einem der Ansprüche 1 bis 4,
**dadurch gekennzeichnet,**
**dass** der elektrische Verbinder (10) von einer Hülse (7;8) aus elektrisch isolierendem Material umgeben ist.

**6.** Verbindungsmuffe nach Anspruch 5,
**dadurch gekennzeichnet,**
**dass** das Klemmelement (5) zwischen Grundhohlkörper (3;4) und Hülse (7;8) eingesetzt ist.

**7.** Verbindungsmuffe nach Anspruch 6,
**dadurch gekennzeichnet,**
**dass** die Hülse (7;8) quergeteilt ist.

**8.** Verbindungsmuffe nach Anspruch 7,
**dadurch gekennzeichnet,**
**dass** einer der beiden ineinander verschraubbaren Grundhohlkörper (3;4) einen hohlzylindrischen Einsatz (18) in einem Bereich aufweist, der die Stoßstelle der zweigeteilten Hülse (7;8) umgibt.

**9.** Verbindungsmuffe nach Anspruch 8,
**dadurch gekennzeichnet,**
**dass** der hohlzylindrische Einsatz (18) aus elektrisch isolierendem Material besteht.

**10.** Verbindungsmuffe nach einem der Ansprüche 1 bis 9,
**dadurch gekennzeichnet,**
**dass** die Hülse (7;8) zusammen mit dem hohlzylindrischer Einsatz (18) eine Labyrinthartige elektrische Isolierung zwischen dem elektrischen Verbinder (10) und dem Grundhohlkörper (3;4) darstellen.

**11.** Verbindungsmuffe nach einem der Ansprüche 1 bis 10,
**dadurch gekennzeichnet,**
**dass** das Klemmelement (5) den Leiter gegenüber Feuchtigkeit abdichtend verschließt.

**12.** Verbindungsmuffe nach einem der Ansprüche 1 bis 11,
**dadurch gekennzeichnet,**
**dass** jeder der beiden Leiter (1;2) durch ein Klemmelement (5) zugentlastet wird.

**13.** Verbindungsmuffe nach einem der Ansprüche 1 bis 12,
**dadurch gekennzeichnet,**
**dass** die Leiter (1;2) Kalt- und/oder Heizkabel von Heizleitern sind.
